# EUROPEAN PATENT APPLICATION

(11) **EP 2 889 410 A1**
(43) Date of publication of application: **01.07.2015**
(21) Application number: 14177142.8
(22) Date of filing: 15.07.2014
(51) Int. Cl.: D06F 21/02, D06F 39/08

(54) **Washing machine**

(30) Priority: 23.12.2013 KR 20130161167
(71) Applicant: Dongbu Daewoo Electronics Corporation, Seoul (KR)
(72) Inventor: Kim, In Dong, 446-908 Gyeonggi-do (KR); Kim, Jeong Hyeon, 430-705 Gyeonggi-do (KR); Kim, Hye Ung, 156-791 Seoul (KR); Lee, Ju Dong, 403-757 Inchon (KR)
(74) Representative: Rau, Schneck & Hübner Patentanwälte Rechtsanwälte PartGmbB

(57) **Abstract**

A washing machine that includes an integrated tub/drum (200) that holds water, holds laundry, and rotates; a hollow rotary shaft (410) coupled to an end and/or surface of the integrated tub/drum (200); a drain pipe (620) in the integrated tub/drum (200) and through at least part of the hollow rotary shaft (410); an air supply pipe (690) in communication with an interior of the integrated tub/drum (200) and through at least part of the hollow rotary shaft (410); and a blower (790) that blows air into the integrated tub/drum (200) through the air supply pipe (690).

## Description

### TECHNICAL FIELD

The present disclosure relates to a washing machine, and more particularly, to a washing machine having an integral or unitary tub and drum configured to hold water and accommodate and rotate laundry.

### BACKGROUND

A washing machine is an apparatus that eliminates foreign matter or substances on or in laundry by agitating and/or rotating water, detergent, and the laundry together. Washing machines may be classified into a pulsator-type washing machine that washes the laundry using a water flow generated by operation of a pulsator in a washing tub, and a drum-type washing machine that rotates the drum to wash laundry by dropping the laundry vertically.

The drum-type washing machine has a door that is at the front of the washing machine to place the laundry through the door. The rotating drum drops the laundry into the water and detergent to wash the laundry, and uses relatively small amounts of washing water and detergent. Specifically, a drum-type washing machine in the related art commonly includes a cabinet that forms an external appearance of the wshing machine, a tub that is in the cabinet and that holds water, a rotatable drum that is in the tub and that accommodates or holds laundry, a drive motor that is installed on or near the tub and that provides power to rotate the drum, a water supply device that supplies water to the tub, and a water drain (e.g., a drain pipe) that drains water from the tub to the outside of the cabinet after the washing operation(s) ends.

Accordingly, according to the drum-type washing machine in the related art, when the laundry is washed, the laundry is put into the tub in a lateral direction by opening a door at the front of the washing machine, water is supplied to the tub, and then the laundry is washed while a lifter in the drum lifts up and drops the laundry as the drum rotates by operation of the drive motor.

As such, the drum-type washing machine in the related art typically includes both the tub and the drum. That is, the drum-type washing machine in the related art has a structure that has the tub to hold water and the drum in the tub to rotate and wash the laundry.

However, because the tub is typically made of a plastic material, the tub may be easily contaminated by hard water, scale, mold, mildew, or other foreign substance(s) that enter or form in the tub as the tub is used over a long period of time. There is a problem in that it is difficult to clean the tub because of the presence of the drum when the tub is contaminated. When the tub is contaminated, the tub becomes dirty, corroded, and/or a source of foreign substances and/or contaminants, and then the laundry becomes contaminated, which may cause irritation or skin problems or disease to the user.

This problem also occurs in the pulsator-type washing machines as well as drum-type washing machines. Pulsator-type washing machines also include a reservoir (tub) in the main body thereof.

According to the drum-type washing machine in the related art, the drum is rotated by a single shaft coupled to one side of the drum. Consequently, there is also vibration and/or noise problem(s) that may occur due to deflection of the single shaft.

### SUMMARY

The present disclosure has been made in an effort to provide a washing machine which uses an integrated, one-piece and/or unitary tub and/or drum ("an integrated tub/drum"), thereby suppressing the generation of mold, mildew, scale, and other contaminants on the inner surface(s) thereof and allowing the integrated tub/drum to be easily cleaned.

The present disclosure has been made in an effort to provide a washing machine which may effectively discharge or drain water from the integrated tub/drum.

One or more exemplary embodiments of the present disclosure provide a washing machine including an integrated tub/drum that holds water, holds laundry, and rotates; a hollow rotary shaft that is coupled to an end and/or surface of the integrated tub/drum; a drain pipe in the integrated tub/drum and through at least part of the hollow rotary shaft; an air supply pipe in communication with an interior of the integrated tub/drum and through at least part of the hollow rotary shaft; and a blower that blows air into the integrated tub/drum through the air supply pipe.

The integrated tub/drum may be sealed when the blower blows air into the integrated tub/drum. The air may be or comprise compressed air.

The integrated tub/drum may have a cylindrical or truncated conical shape. The hollow rotary shaft may be coupled to and/or pass through an end and/or surface (e.g., an end) of the integrated tub/drum that has a relatively large surface area.

A portion or end of the drain pipe that is in the integrated tub/drum may extend and/or bend away from the hollow rotary shaft in a direction (e.g., downward).

The washing machine may further include a water supply pipe in the integrated tub/drum and through at least part of the hollow rotary shaft.

A portion or end of the water supply pipe that is in the integrated tub/drum may extend and/or bend away from the hollow rotary shaft in a direction (e.g., upward and/or leftward or rightward).

The washing machine may further include: a drive shaft that is coupled to another end and/or surface of the integrated tub/drum (e.g., the end of the integrated tub/drum away from or opposite to the end to and/or through which the hollow rotary shaft is coupled and/or passes); and a drive motor that rotates the drive shaft.

In one or more other exemplary embodiments, the drive shaft may have a passage or opening while the washing machine may further include a water supply pipe in the integrated tub/drum and through the passage or opening of the drive shaft.

According to exemplary embodiments of the present disclosure, the washing machine includes an integrated tub/drum, thereby suppressing or preventing the generation of mold, mildew, scale or other contaminants on the inner surface(s) of the integrated tub/drum, and allowing the integrated tub/drum to be easily cleaned.

According to exemplary embodiments of the present disclosure, the washing machine may effectively discharge or drain water from the integrated tub/drum.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a perspective view of a washing machine according to one or more exemplary embodiments of the present disclosure.
FIG. 2 is a cross-sectional view of the exemplary washing machine of FIG. 1.
FIG. 3 is an enlarged cross-sectional view of the exemplary hollow rotary shaft in FIG. 2.
FIG. 4 is a cross-sectional view of the exemplary hollow rotary shaft in FIG. 2.
FIG. 5 is a cross-sectional view of a washing machine according to one or more other exemplary embodiments of the present disclosure.

### DETAILED DESCRIPTION

In the following detailed description, reference is made to the accompanying drawings, which form a part hereof. The illustrative embodiments described in the detailed description, drawings, and claims are not meant to be limiting. Other embodiments may be utilized, and other changes may be made, without departing from the spirit or scope of the subject matter presented here.

Hereinafter, one or more exemplary embodiments of the present disclosure will be described in detail with reference to the accompanying drawings so that those skilled in the technical field to which the present disclosure pertains may easily carry out the exemplary embodiments. The present disclosure may be implemented in various different forms, and is not limited to the exemplary embodiment(s) described herein.

In exemplary embodiments, constituent elements having the same structure or configuration will be representatively described using the same reference numerals. Further exemplary embodiments may focus on or be described with regard to constituent elements that are different from the constituent elements described in other or earlier exemplary embodiment(s).

The drawings are schematically illustrated, and the scales of the drawings are not necessarily identical to each other or necessarily to scale. Relative dimensions and ratios of the parts illustrated in the drawings may be exaggerated or reduced in size(s) thereof for clarification of the drawings and convenience, and any particular dimension is only illustrative, and is not limited thereto. The same structures, elements or components illustrated in two or more drawings are designated by the same reference numerals to illustrate the same or similar features.

The exemplary embodiments of the present disclosure are specifically presented as ideal exemplary embodiments of the present disclosure. As a result, various modifications of the drawings are expected. Therefore, the exemplary embodiments are not limited to specific forms in regions illustrated in the drawings, and for example, include modifications of form by manufacturing.

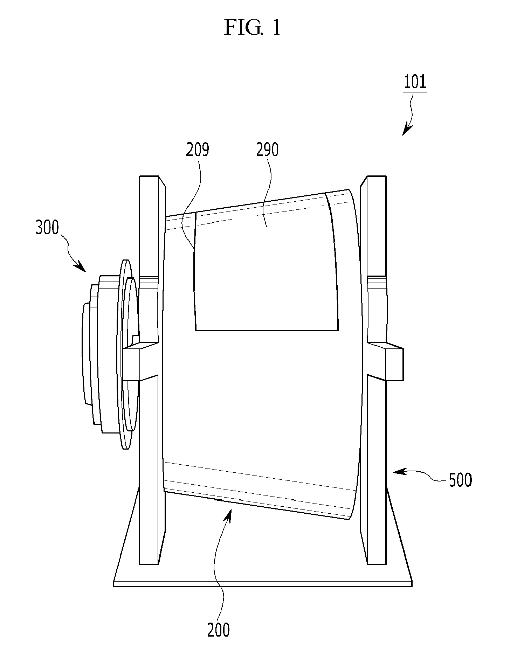

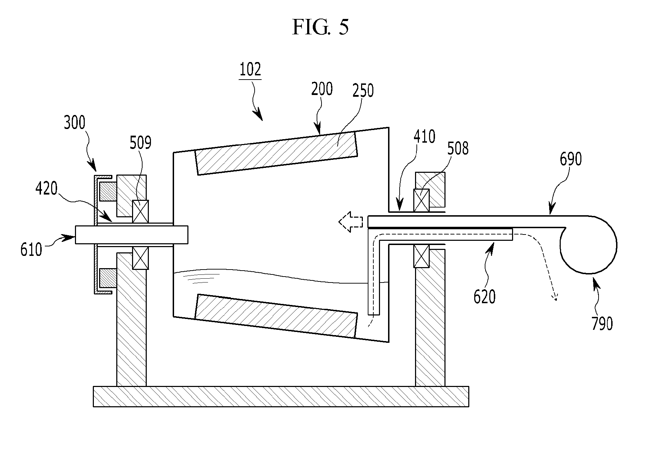

Hereinafter, a washing machine 101 according to exemplary embodiment(s) of the present disclosure will be described with reference to FIGS. 1 to 4 while a washing machine 102 according to one or more other exemplary embodiments will be described in FIG. 5.

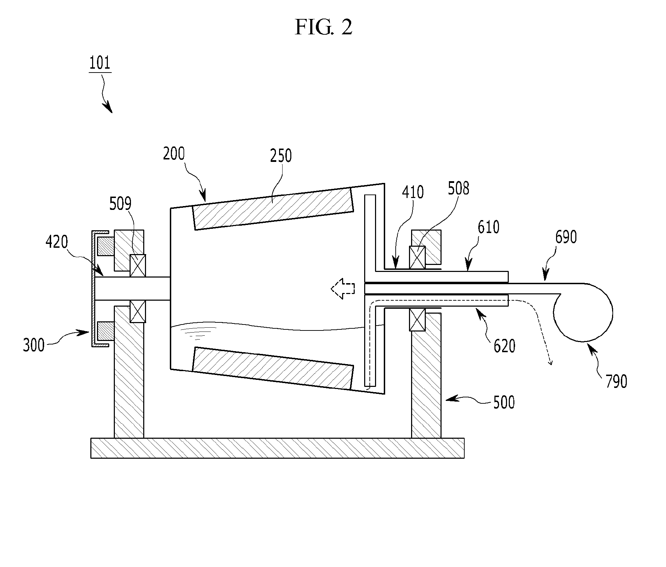

As illustrated in FIGS. 1 and 2, the washing machine 101 according to exemplary embodiments of the present disclosure includes an integrated tub/drum 200, a hollow rotary shaft 410, a drain pipe 620, an air supply pipe 690, and a blower 790. The air supply pipe 690 may supply air. The air may be or comprise compressed air.

The washing machine 101 according to exemplary embodiments of the present disclosure may further include a water supply pipe 610, one or more lifters 250, a supporting frame 500, a supporting bearing 508, a drive bearing 509, a drive shaft 420, and a drive motor 300.

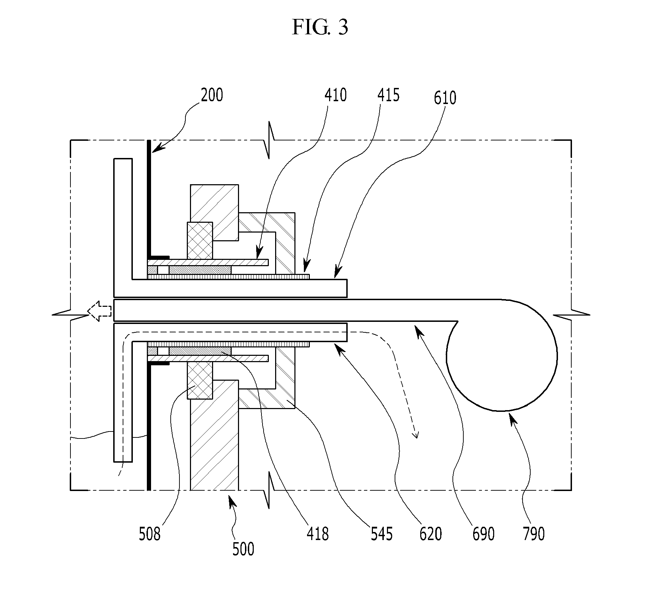

As illustrated in FIG. 3, the washing machine 101 according to exemplary embodiments of the present disclosure may further include a fixed shaft 415, a rotary bearing 418, a water seal 218, and a shaft fixing mechanism or brace 545.

Although not illustrated, the exemplary washing machine 101 may further include a cabinet or housing, a water supply pump, and/or a drain pump.

The cabinet or housing forms an external shape and/or appearance of the washing machine 101, and a control panel for controlling the washing machine 101 may be installed in and/or on the cabinet. Because the cabinet may have various shapes that are known to those skilled in the art, a detailed description thereof will be omitted.

The water supply pump and the drain pump (which may be separate pumps, or only one pump providing both functions) supplies water to the integrated tub/drum 200 through the water supply pipe 610 or drains water from the integrated tub/drum 200 through the drain pipe 620. Because the water supply pumps and the water drain pumps suitable for use in the washing machine 101 are also known to those skilled in the art, a detailed description thereof will be omitted.

The integrated tub/drum 200 holds water, holds laundry, and rotates. The integrated tub/drum 200 may comprise or be made of stainless steel. Alternatively, the integrated tub/drum 200 may comprise or be made of metal and/or plastic, and have a ceramic and/or stain-resistant coating on the inner surface thereof. That is, according to the various exemplary embodiments of the present disclosure, the integrated tub/drum 200 is not easily contaminated by hard water, scale, mold, mildew, or other foreign substance(s), and may be easily cleaned even if the integrated tub/drum 200 becomes contaminated. In a typical washing machine having a tub and a separate drum, there is a problem because the drum needs to be separated from the interior of or removed from the tub in order to clean the tub that holds water. It is inconvenient and difficult to remove or separate the drum from the interior of the tub. Unlike the typical washing machine, the exemplary washing machine 101 has the integrated tub/drum 200 that may be easily cleaned.

As shown in FIG. 1, the integrated tub/drum 200 may include an opening 209 in the circumferential surface of the integrated tub/drum 200. The laundry may be put into the integrated tub/drum 200, or the laundry in the integrated tub/drum 200 may be taken out of the integrated tub/drum 200, through the opening 209.

The washing machine 101 according to the exemplary embodiments of the present disclosure may further include a drum cover 290 that is separably or removably coupled to the opening 209 of the integrated tub/drum 200. The drum cover 290 is opened or removed from the integrated tub/drum 200 when the laundry is put into or taken out of the integrated tub/drum 200, and coupled to the integrated tub/drum 200 to tightly close the opening 209 of the integrated tub/drum 200 to seal an internal space of the integrated tub/drum 200 when the laundry is washed. In one embodiment, the cover 290 slides into place along snug and/or watertight grooves in the integrated tub/drum 200 at the opening 209. In another embodiment, the cover 290 is secured in place over the opening 209 by one or more clasps (and optionally, one or more mating tabs and recesses), and a gasket or seal may be along the periphery of the opening 209 and/or cover 290.

In exemplary embodiments of the present disclosure, the integrated tub/drum 200 has a truncated conical shape having ends and/or surfaces that intersect a rotation center axis and that have different surface areas. However, the exemplary embodiments of the present disclosure are not particularly limited thereto, and the integrated tub/drum 200 may also have a cylindrical shape, "barrel" shape, or other shape.

A plurality of lifters 250 may be inside the integrated tub/drum 200. The lifter 250 has a substantially rectangular, sloped rectangular, or bar shape that extends or protrudes from an inner circumferential surface of the integrated tub/drum 200 at a predetermined height toward a center of the integrated tub/drum 200.

Accordingly, when the integrated tub/drum 200 rotates, the laundry in the integrated tub/drum 200 is washed by being lifted up by the lifter 250 due to rotational force of the integrated tub/drum 200 and dropped back into the wash water and detergent.

The supporting frame 500 supports the hollow rotary shaft 410 so that the hollow rotary shaft 410 is rotatable. The supporting frame 500 may be accommodated in or coupled to the cabinet (not illustrated). The supporting frame 500 may have one or more shapes such as an intersecting 'X' shape, and the hollow rotary shaft 410 may be supported at the intersection. Alternatively, the frame 500 may have a V or inverted V shape (with the hollow rotary shaft 410 at the point of the V), or other shape or form that supports the integrated tub/drum 200 and rotary shaft 410.

However, exemplary embodiments of the present disclosure are not limited thereto, and the supporting frame 500 may have various shapes and/or comprise various structures that may be modified and carried out by those skilled in the art based on known technology.

Both the water supply pipe 610 and the drain pipe 620 are inserted into the integrated tub/drum 200 through a passage or opening in the hollow rotary shaft 410. The water supply pipe 610 supplies water to the interior of the integrated tub/drum 200, and the drain pipe 620 drains water from the interior of the integrated tub/drum 200.

In exemplary embodiments of the present disclosure, the drain pipe 620 may be in the integrated tub/drum 200 and through the passage or opening of the hollow rotary shaft 410. A portion or end of the drain pipe 620 that is in the integrated tub/drum 200 may extend and/or bend away from the hollow rotary shaft 410 in a particular direction (e.g., downward). FIG. 2 illustrates one exemplary embodiment in which the drain pipe 620 bends downward, but embodiments of the present disclosure are not limited thereto. The drain pipe 620 may bend in other directions or may not be bent.

The hollow rotary shaft 410 is coupled to and/or passes through an end and/or surface (e.g., a substantially circular end) of the integrated tub/drum 200 that has a relatively large surface area. A passage or opening in the hollow rotary shaft 410 communicates with the interior of the integrated tub/drum 200. Further, the portion or end of the drain pipe 620 that is in the integrated tub/drum 200 and that may extend and/or bend is also adjacent to the relatively large end of the integrated tub/drum 200.

Accordingly, the gradient of the integrated tub/drum 200 having a truncated conical shape may cause the water in the integrated tub/drum 200 to collect in an area near or at the relatively large end of the integrated tub/drum 200.

Accordingly, the drain pipe 620 may effectively drain the collected water from the area near or at the relatively large end and/or surface of the integrated tub/drum 200.

In exemplary embodiments of the present disclosure, the water supply pipe 610 may be in the integrated tub/drum 200 and through the passage or opening of the hollow rotary shaft 410. A portion or end of the water supply pipe 610 that is in the integrated tub/drum 200 may extend and/or bend away from the hollow rotary shaft 410 in a particular direction (e.g., upward and/or leftward or rightward). FIG. 2 illustrates one exemplary embodiment in which the water supply pipe 610 bends upward, but the exemplary embodiments of the present disclosure are not limited thereto. The water supply pipe 610 may bend in other directions, or may not be bent.

In exemplary embodiments of the present disclosure, the air supply pipe 690 may be in communication with the interior of the integrated tub/drum 200 and through the passage or opening of the hollow rotary shaft 410 in which the drain pipe 620 and the water supply pipe 610 may also pass through.

The blower 790 may be coupled to an end of the air supply pipe 690 that is opposite another end of the air supply pipe 690 in communication with the interior of the integrated tub/drum 200. That is, the blower 790 supplies air into the integrated tub/drum 200 through the air supply pipe 690. The air may be or comprise compressed air.

The blower 790 supplies air into the integrated tub/drum 200 that is sealed, except for the air supply pipe 690 and the drain pipe 620. That is, when the integrated tub/drum 200 is sealed, the water supply pipe 610 is closed while the opening 209 of the integrated tub/drum 200 is closed by the drum cover 290. Thus, air is supplied through the air supply pipe 690 into the integrated tub/drum 200.

Therefore, when the blower 790 supplies air into the integrated tub/drum 200, the internal pressure of the integrated tub/drum 200 increases. The increased internal pressure causes the water in the integrated tub/drum 200 to drain through the drain pipe 620 at a relatively rapid rate.

As such, according to exemplary embodiments of the present disclosure, the water in the integrated tub/drum 200 may drain without the use of a suction-type pump or other pump, such as a water drain pump.

Therefore, according to exemplary embodiments of the present disclosure, the water draining operation may reduce residual water in the integrated tub/drum 200, in comparison to the case in which the water is drained by using a vacuum force of the suction-type pump. Additionally, a water drain speed or rate may be easily adjusted by adjusting the air pressure of the blower 790.

The washing machine 101 according to exemplary embodiments of the present disclosure may have reduced noise because the suction-type pump is not used.

As illustrated in FIG. 3, the hollow rotary shaft 410 is coupled to and/or passes through an end and/or surface of the integrated tub/drum 200. The passage or opening in the hollow rotary shaft 410 communicates with the interior of the integrated tub/drum 200.. In exemplary embodiments of the present disclosure, the hollow rotary shaft 410 is coupled to and/or passes through the end and/or surface of the integrated tub/drum 200 that has a relatively large surface area.

The fixed shaft 415 is in the passage or opening of the hollow rotary shaft 410 and does not rotate. The fixed shaft 415 supports the water supply pipe 610, the drain pipe 620, and the air supply pipe 690 therein. That is, even when the hollow rotary shaft 410 rotates, the water supply pipe 610, the drain pipe 620, and the air supply pipe 690 in the fixed shaft 415 do not rotate.

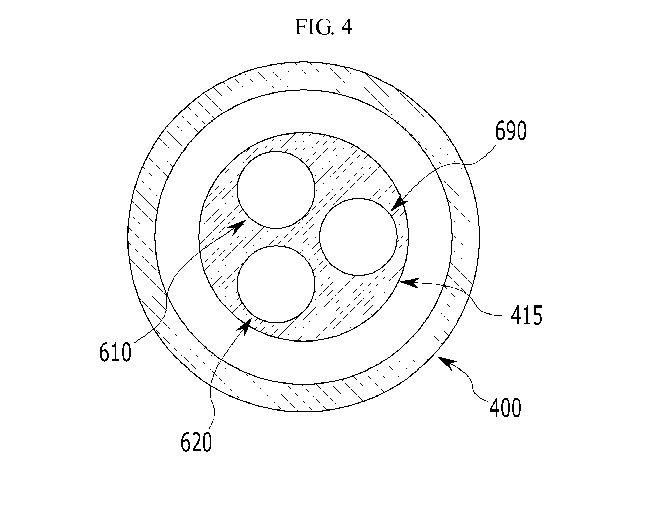

As illustrated in FIG. 4, the water supply pipe 610, the drain pipe 620, and the air supply pipe 690 may be in the fixed shaft 415.

However, the water supply pipe 610, the drain pipe 620, and the air supply pipe 690 in the fixed shaft 415 are not limited to the positions illustrated in FIG. 4. The positions may be variously modified by those skilled in the art to carry out teachings of the present disclosure.

One end of the fixed shaft 415 extends or protrudes outside of the hollow rotary shaft 410 (e.g., away from the integrated tub/drum 200), and the shaft fixing mechanism or brace 545 connects one end of the fixed shaft 415 to the supporting frame 500. That is, the shaft fixing mechanism or brace 545 is coupled to the supporting frame 500 to support the fixed shaft 415 so that the fixed shaft 415 does not rotate in the hollow rotary shaft 410.

The rotary bearing 418 is between the hollow rotary shaft 410 and the fixed shaft 415 so that the hollow rotary shaft 410 and the fixed shaft 415 are slidable or rotatable relative to each other. That is, by the rotary bearing 418, the hollow rotary shaft 410 may rotate while the fixed shaft 415 is fixed. For example, the rotary bearing 418 may comprise a needle roller bearing.

The water seal 218 is between the hollow rotary shaft 410 and the fixed shaft 415, at an interface with the integrated tub/drum 200, to block or prevent the water in the integrated tub/drum 200 from flowing into the rotary bearing 418 through the passage or opening of the hollow rotary shaft 410.

The supporting bearing 508 is between the hollow rotary shaft 410 and the supporting frame 500. That is, the supporting bearing 508 helps the supporting frame 500 to support the hollow rotary shaft 410 and enable the hollow rotary shaft 410 to rotate.

As illustrated in FIG. 2, the drive shaft 420 is coupled to an other end and/or surface (e.g., a relatively small end) of the integrated tub/drum 200, opposite to the end and/or surface to that the hollow rotary shaft 410 is coupled. The other end and/or surface may have a relatively small surface area. That is, the integrated tub/drum 200 rotates while being supported by the drive shaft 420 and the hollow rotary shaft 410.

Like the hollow rotary shaft 410, the drive shaft 420 is also supported by the supporting frame 500. The drive shaft 420 may also be supported at the intersection of the supporting frame 500.

The drive bearing 509 is between the drive shaft 420 and the supporting frame 500. That is, the drive bearing 509 helps the supporting frame 500 to support the drive shaft 420 and enable the drive shaft 420 is rotate.

The drive motor 300 rotates the drive shaft 420, and provides rotational power to the integrated tub/drum 200.

In exemplary embodiments of the present disclosure, the drive motor 300 may rotate the integrated tub/drum 200 to position the opening 209 of the integrated tub/drum 200 at a relatively upper portion when the laundry is put into or taken out of the integrated tub/drum 200. That is, the drive motor 300 may move the opening 209 of the integrated tub/drum 200 to a position that is convenient for a user to put the laundry into the integrated tub/drum 200 or to take the laundry out of the integrated tub/drum 200.

According to the aforementioned exemplary embodiments of the present disclosure, the washing machine 101 uses the integrated tub/drum 200 to suppress the generation of mold, scale, and other contaminants on the inner surface(s) thereof and to allow the integrated tub/drum 200 to be easily cleaned.

According to exemplary embodiments of the present disclosure, a temperature of the water that is supplied into the integrated tub/drum 200 may be effectively raised.

According to exemplary embodiments of the present disclosure, the washing machine 101 of FIGS 1-4 may effectively drain water from the integrated tub/drum 200.

According to exemplary embodiments of the present disclosure, the drive shaft 420 and the hollow rotary shaft 410 rotate while supporting both ends of the integrated tub/drum 200 that are opposite to each other to reduce and/or prevent cantilevered beam deflection of the shaft, in comparison to the case in which the drum is rotated with a single shaft connected to one end and/or surface of the drum, thereby reducing vibration and noise.

Hereinafter, a washing machine 102 according to one or more other exemplary embodiments of the present disclosure will be described with reference to FIG. 5.

As illustrated in FIG. 5, the washing machine 102 according to one or more other exemplary embodiments of the present disclosure uses a hollow drive shaft 420. That is, like a hollow rotary shaft 410, the hollow drive shaft 420, which transmits rotational power of a drive motor 300 to a integrated tub/drum 200, has a passage or opening.

According to other exemplary embodiments of the present disclosure as shown in FIG. 5, a water supply pipe 610 is in the integrated tub/drum 200 and through the passage or opening of the hollow drive shaft 420.

However, other exemplary embodiments of the present disclosure are not limited to FIG. 5. A drain pipe 620 may be in the integrated tub/drum 200 and through the passage or opening of the hollow drive shaft 420.

The water supply pipe 610 passes through and is supported by the passage or opening of the hollow drive shaft 420 similarly or identically to the water supply pipe 610, the drain pipe 620, and the air supply pipe 690 passing through the passage or opening of the hollow rotary shaft 410 in the exemplary embodiments of the present disclosure described with reference to FIGS. 1-4.

That is, in FIG. 5, the water supply pipe 610 is in the integrated tub/drum 200 and through the passage or opening of the hollow drive shaft 420 while the drain pipe 620 and the air supply pipe 690 are in the integrated tub/drum 200 and through the passage or opening of the hollow rotary shaft 410, but other exemplary embodiments of the present disclosure are not limited to FIG. 5. The drain pipe 620 or the air supply pipe 690 may pass through the hollow drive shaft 420 while the water supply pipe 610 may pass through the hollow rotary shaft 410.

According to other exemplary embodiments of the present disclosure described with reference to FIG. 5, the washing machine 102 uses the integrated tub/drum 200 to suppress the generation of mold, mildew, scale, and other contaminants on the inner surface(s) thereof and to allow the integrated tub/drum 200 to be easily cleaned.

According to other exemplary embodiments of the present disclosure described with reference to FIG. 5, the washing machine 102 may more effectively supply water to the integrated tub/drum 200 and/or drain water from the integrated tub/drum 200.

Diameters of the water supply pipe 610 and the drain pipe 620 may be optimized using both the passage or opening of the hollow rotary shaft 410 and the passage or opening of the hollow drive shaft 420.

When the water supply pipe 610, the drain pipe 620, and the air supply pipe are in the integrated tub/drum 200 and through the single hollow rotary shaft 410 as described in exemplary embodiments of the present disclosure with reference to FIGS. 1-4, a diameter of the hollow rotary shaft 410 may be relatively large to accomodate the water supply pipe 610 and the drain pipe 620 that move a sufficient amount of water into and out of the integrated tub/drum 200.

However, according to other exemplary embodiments of the present disclosure described with reference to FIG. 5, either the water supply pipe 610 or the drain pipe 620 may be placed in the the passage or opening of the hollow rotary shaft 410 while the other (e.g., the water supply pipe 610 or the drain pipe 620) may be placed in the passage or opening of the hollow drive shaft 420, thereby effectively increasing the diameters of the water supply pipe 610 and the drain pipe 620. A diameter of the air supply pipe may also be optimized.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1. A washing machine comprising:
an integrated tub/drum (200) configured to hold water, hold laundry and rotate;
a hollow rotary shaft (410) coupled to an end and/or surface of the integrated tub/drum (200);
a drain pipe (620) in the integrated tub/drum (200) and through at least part of the hollow rotary shaft (410);
an air supply pipe (690) in communication with an interior of the integrated tub/drum (200) and through at least part of the hollow rotary shaft (410); and
a blower (790) configured to blow air into the integrated tub/drum (200) through the air supply pipe.

2. The washing machine of claim 1, wherein the integrated tub/drum (200) is sealed when the blower (790) blows air into the integrated tub/drum (200).

3. The washing machine of claim 1, wherein the integrated tub/drum (200) has a truncated conical shape, and the end and/or surface of the integrated tub/drum (200) to which the hollow rotary shaft (410) is coupled has a relatively large surface area.

4. The washing machine of claim 1, wherein a portion of the drain pipe (620) in the integrated tub/drum (200) bends away from the hollow rotary shaft (410) in a downward direction.

5. The washing machine of claim 1, further comprising:
a drive shaft (420) coupled to another end and/or surface of the integrated tub/drum (200) that is opposite the end and/or surface to which the hollow rotary shaft (410) is coupled; and
a drive motor (300) configured to rotate the drive shaft (420).

6. The washing machine of claim 5, further comprising:
a water supply pipe (610) in the integrated tub/drum (200) and through at least part of the hollow rotary shaft (410).

7. The washing machine of claim 6, wherein a portion of the water supply pipe (610) in the integrated tub/drum (200) bends away from the hollow rotary shaft (410) in at least one of an upward, leftward, and rightward direction.

8. The washing machine of claim 5, wherein the drive shaft (420) includes a passage, and the washing machine further comprises:
a water supply pipe (610) in the integrated tub/drum (200) and through the passage of the drive shaft (420).

9. The washing machine of claim 2, further comprising:
a drive shaft (420) coupled to another end and/or surface of the integrated tub/drum (200) that is opposite the end and/or surface to which the hollow rotary shaft (410) is coupled; and
a drive motor (300) configured to rotate the drive shaft (420).

10. The washing machine of claim 9, further comprising:
a water supply pipe (610) in the integrated tub/drum (200) and through at least part of the hollow rotary shaft (410).

11. The washing machine of claim 9, wherein the drive shaft (420) includes a passage, and the washing machine further comprises:
a water supply pipe (610) in the integrated tub/drum (200) and through the passage of the drive shaft (420).

12. The washing machine of claim 3, further comprising:
a drive shaft (420) coupled to another end and/or surface of the integrated tub/drum (200) that is opposite the end and/or surface to which the hollow rotary shaft (410) is coupled; and
a drive motor (300) configured to rotate the drive shaft (420).

13. The washing machine of claim 12, further comprising:
a water supply pipe (610) in the integrated tub/drum (200) and through at least part of the hollow rotary shaft (410).

14. The washing machine of claim 4, further comprising:
a drive shaft (420) coupled to another end and/or surface of the integrated tub/drum (200) that is opposite the end and/or surface to which the hollow rotary shaft (410) is coupled; and
a drive motor (300) configured to rotate the drive shaft (420).

15. The washing machine of claim 14, further comprising:
a water supply pipe (610) in the integrated tub/drum (200) and through at least part of the hollow rotary shaft (410).
